# EUROPEAN PATENT SPECIFICATION

(11) **EP 2 004 569 B1**
(45) Date of publication and mention of the grant of the patent: **01.05.2013**
(21) Application number: 06794644.2
(22) Date of filing: 04.10.2006
(51) Int. Cl.: C04B 18/16, C04B 18/14, C09K 8/16

(54) **SETTABLE DRILLING FLUIDS COMPRISING CEMENT KILN DUST AND METHODS OF USING THEM**
ZEMENTOFENSTAUB ENTHALTENDE ABBINDBARE BOHRFLÜSSIGKEITEN UND VERWENDUNGSVERFAHREN DAFÜR
BOUES DE FORAGE DURCISSABLES COMPRENANT DE LA POUSSIERE DE FOUR A CIMENT ET PROCEDES D'UTILISATION DE CELLES-CI

(30) Priority: 11.04.2006 US 403032; 11.04.2006 US 402741
(43) Date of publication of application: 24.12.2008
(73) Proprietor: Halliburton Energy Services, Inc., Duncan, OK 73533 (US)
(72) Inventor: RODDY, Craig, W., Duncan, OK 73533 (US); CHATTERJI, Jiten, Duncan, OK 73533 (US); BRENNEIS, Darrell, Chad, Marlow, OK 73055 (US); KING, Bobby, J., Duncan, OK 73533 (US)
(74) Representative: Curtis, Philip Anthony
(86) International application number: PCT/GB2006/003692
(87) International publication number: WO 2007/116196

(56) References cited:
- DE-U1- 20 217 167
- US-A- 5 370 185
- US-A1- 2005 155 763
- PARSONS R L ET AL: "USE OF CEMENT KILN DUST FOR THE STABILIZATION OF SOILS" GEOTECHNICAL SPECIAL PUBLICATION, AMERICAN SOCIETY OF CIVIL ENGINEERS, NEW YORK,, US, no. 126I, 31 July 2004 (2004-07-31), pages 1124-1131, XP008061288 ISSN: 0895-0563

## Description

### BACKGROUND

The present invention relates to subterranean operations and, more particularly, to settable drilling fluids that comprise an aqueous-based drilling fluid and cement kiln dust ("CKD"), and associated methods of use in subterranean operations.

During the drilling of a well bore in a subterranean formation, a drilling fluid may be used to, among other things, cool the drill bit, lubricate the rotating drill string to prevent it from sticking to the walls of the well bore, prevent blowouts by serving as a hydrostatic head to counteract the sudden entrance into the well bore of high pressure formation fluids, and remove drill cuttings from the well bore. A drilling fluid may be circulated downwardly through a drill pipe and drill bit and then upwardly through the well bore to the surface. A variety of drilling fluids may be used during the drilling of well bores into a subterranean formation. For instance, the drilling fluid used may be any number of fluids (gaseous or liquid) and mixtures of fluids and solids (such as solid suspensions, mixtures, and emulsions).

Once the well bore has been drilled to a desired depth, the drill string and drill bit may be removed from the well bore and the drilling fluid may be left in the well bore to provide hydrostatic pressure on the formation penetrated by the well bore, *e.g.,* to prevent the flow of formation fluids into the well bore. Next, a pipe string (*e.g*., casing, liners, etc. may be introduced into the well bore. Depending on the depth of the well bore and whether or not any problems are encountered in introducing the pipe string into the well bore, the drilling fluid may remain relatively static in the well bore for a relatively long time period, for example, up to 24 hours or longer. While drilling fluids are not settable (*e.g.*, they generally do not to form a hardened mass over time), drilling fluids may increase in gel strength over time. As referred to herein, "gel strength" is the measure of the ability of a colloidal dispersion to form a gel and is based upon its resistance to shear. Accordingly, during the time period that the drilling fluid is static in the well bore, portions of the drilling fluid may increase in gel strength so that displacement of the drilling fluid from within the well bore may become more difficult.

After the pipe string has been introduced into the well bore, the pipe string may be cemented in the well bore by pumping a cement composition into an annular space between the walls of the well bore and the pipe string disposed therein, thereby displacing the drilling fluid in the annulus. However, if the drilling fluid has developed sufficient gel strength due to remaining static in the well bore, portions of the drilling fluid in the annulus may not be displaced Since the drilling fluid generally is not settable, this may be problematic. For example, because the drilling fluid may remain on the surfaces of the subterranean formation and on the surfaces of the pipe string, a suitable bond between the cement composition and the surfaces may not result. This may lead to the loss of zonal isolation, which can result in formation fluids continuing to enter and flow in the well bore.

In order to solve the above-described problem, settable drilling fluids have been used heretofore. Generally, a settable drilling fluid should be formulated so that it is compatible with drilling fluid (if any) remaining in the well bore. In some instances, the settable drilling may be formulated using at least a portion of the drilling fluid that was used in the drilling of the well bore. Because the settable drilling fluid should be compatible with any fluids remaining in the well bore, use of a settable drilling fluid in subsequent cement operations (*e.g*., primary cementing) may reduce the problems associated with incompatibility between a cement composition and the drilling fluid remaining in the well bore. Additionally, use of a settable drilling fluid may alleviate problems associated with disposal of the used drilling fluid.

During the manufacture of cement, a waste material commonly referred to as "CKD" is generated. "CKD," as that term is used herein, refers to a partially calcined kiln feed that is typically removed from the gas stream and collected during the manufacture of cement. Usually, large quantities of CKD are collected in the production of cement, and they are commonly disposed of as waste. Disposal of the waste CKD can add undesirable costs to the manufacture of the cement, as well as the environmental concerns associated with its disposal. The chemical analysis of CKD from various cement manufactures varies depending on a number of factors, including the particular kiln feed, the efficiencies of the cement production operation, and the associated dust collection systems. CKD generally may comprise a variety of oxides, such as SiO₂, Al₂O₃, Fe₂O₃, CaO, MgO, SO₃, Na₂O, and K₂O.

### SUMMARY

The present invention relates to subterranean operations and, more particularly, to settable drilling fluids comprising an aqueous-based drilling fluid and CKD, and associated methods of use in subterranean operations.

According to a first aspect of the invention there is provided a settable drilling fluid comprising: an aqueous-based drilling fluid capable of carrying drill cuttings, wherein the drilling fluid comprises: water present in an amount sufficient for using the aqueous-based drilling fluid for drilling in a subterranean formation; and at least one additive selected from the group consisting of a viscosifier, a weighting material, a thinner, and a filtration control agent; and cement kiln dust present in the settable drilling fluid in an amount in the range of from 1% to 25% by weight of the settable drilling fluid, as defined by claim 1. Further features are defined in the dependent claims.

Preferably, there is provided a settable drilling fluid that comprises an aqueous-based drilling fluid, cement kiln dust, silica fume, and calcium hydroxide.

Preferably, there is provided a settable drilling fluid that comprises an aqueous-based drilling fluid, cement kiln dust, a hydraulic cement, silica fume, vitrified shale, and calcium hydroxide.

According to another aspect of the invention there is provided a method of cementing that comprises providing a settable drilling fluid according to a first aspect of the invention, introducing the settable drilling fluid into a subterranean formation, and allowing the settable drilling fluid to set in the subterranean formation.

Preferably, the settable drilling fluid is allowed to set in an annulus between the subterranean formation and a pipe string located in the subterranean formation.

According to another aspect of the invention there is provided a method of converting an aqueous-based drilling fluid to a settable drilling fluid that comprises providing the aqueous-based drilling fluid, wherein the aqueous-based drilling fluid, comprises:
water present in an amount sufficient for using the aqueous-based drilling fluid for drilling in a subterranean formation; and
at least one additive selected from the group consisting of a viscosifier, a weighting material, a thinner, and a filtration control agent; and
adding cement kiln dust to the aqueous-based drilling fluid to form the settable drilling fluid, wherein the cement kiln dust is added in an amount in the range of from 1% to 25% by weight of the settable drilling fluid.

Preferably, the method further comprises the step of adding additional water to the aqueous-based drilling fluid.

According to another aspect of the invention there is provided a method of drilling a well bore and cementing a well bore that comprises drilling a well bore, circulating an aqueous-based drilling fluid in the well bore during the step of drilling the well bore, wherein the aqueous-based drilling fluid comprises:
water present in an amount sufficient for using the aqueous-based drilling fluid for drilling in a subterranean formation; and
at least one additive selected from the group consisting of a viscosifier, a weighting material, a thinner, and a filtration control agent;
adding cement kiln dust to the aqueous-based drilling fluid to form a settable drilling fluid, and allowing the settable drilling fluid to set in the well bore;
wherein the cement kiln dust is added in an amount in the range of from 1% to 25% by weight of the settable drilling fluid.

Preferably, the method further comprises the step of adding additional water to the aqueous based drilling fluid.

The features and advantages of the present invention will be apparent to those skilled in the art. While numerous changes may be made by those skilled in the art, such changes are within the spirit of the invention.

### DESCRIPTION OF PREFERRED EMBODIMENTS

The present invention relates to subterranean operations and, more particularly, to settable drilling fluids comprising an aqueous-based drilling fluid and CKD, and associated methods of use in subterranean operations.

### I. Example Settable Drilling Fluids of the Present Invention

The present invention provides a settable drilling fluid comprising an aqueous-based drilling fluid and CKD. These settable drilling fluids should be suitable for use in a variety of subterranean cementing operations, including, but not limited to, primary cementing. Generally, the settable drilling fluids of the present invention may be formulated so that it is compatible with the drilling fluid, if any, that remains in the well bore from the drilling operations previously performed in the well bore.

Generally, any aqueous-based drilling fluid suitable for use in drilling operations may be used, provided the drilling fluid, or any components thereof, does not adversely interact with the other components of the settable drilling fluids of the present invention. In some embodiments, the drilling fluid may included at least a portion of the drilling fluid that was used in drilling the well bore. Suitable aqueous-based drilling fluids include any number of fluids that may be used for drilling a well bore. An example of a suitable aqueous drilling fluid comprises an aqueous gel. For viscosification, in some embodiments, suitable aqueous gels may comprise a viscosifier, such as clays (*e.g*, bentonite, attapulgite, sepeolite, etc.) and polymeric viscosifiers. In some embodiments, suitable aqueous gels may comprise a weighting material (*e.g*., barium sulfate). In some embodiments, suitable aqueous gels may comprise calcium oxide (*e.g*., lime muds) and/or partially hydrolyzed polyacrylamide ("PHPA") (*e.g*., PHPA muds). Additionally, suitable aqueous drilling fluids further may comprise any of a variety of suitable additives, including, but not limited to, thinners, filtration control agents, polymeric viscosifiers, caustic soda, salts (*e.g*., sodium chloride), and combinations thereof.

In some embodiments, the aqueous-based drilling fluid may be present in the settable drilling fluids of the present invention in an amount in the range of from about 5% to about 80% by weight of the settable drilling fluid. In some embodiments, the drilling fluid may be present in the settable drilling fluids of the present invention in an amount in the range of from about 5% to about 40% by weight of the settable drilling fluid. In some embodiments, the drilling fluid may be present in the settable drilling fluids of the present invention in an amount in the range of from about 10% to about 30% by weight of the settable drilling fluid. One of ordinary skill in the art will be able to determine, with the benefit of this disclosure, the appropriate amount of the drilling fluid present in the settable drilling fluids of the present invention based on a number of factors, including the desired compressive strength, downhole temperature, formation permeability, formation porosity, setting of the mud filter cake, and rheology of the fluid.

The CKD should be included in the settable drilling fluid of the present invention in an amount sufficient, among other things, to provide the desired compressive strength for a particular application. The CKD is present in the settable drilling fluids in an amount in the range of from about 1% to 25% by weight of the settable drilling fluid.

In some embodiments, the settable drilling fluids of the present invention optionally further may comprise additional water. The additional water included in the settable drilling fluids of the present invention may include freshwater, saltwater (*e.g*., water containing one or more salts dissolved therein), brine (*e.g*., saturated saltwater produced from subterranean formations), seawater, or combinations thereof. Generally, the water may be from any source, provided that it does not contain an excess of compounds that may adversely affect other components in the settable composition. In some embodiments, the additional water may be included in the settable drilling fluids of the present invention in an amount in the range of from about 5% to about 40% by weight of the settable drilling fluid. In some embodiments, the additional water may be included in the settable drilling fluids of the present invention in an amount in the range of from about 15% to about 35% by weight of the settable drilling fluid.

Optionally, in some embodiments, the settable drilling fluids of the present invention further may comprise silica fume. Generally, the silica fume may be included in the settable drilling fluids of the present invention in an amount sufficient to provide the desired compressive strength. In some embodiments, the silica fume may be present in the settable drilling fluids of the present invention in an amount in the range of from about 5% to 20% by weight of the settable drilling fluid. In some embodiments, the silica fume may be present in the settable drilling fluids of the present invention in an amount in the range of from about 8% to 15% by weight of the settable drilling fluid.

Optionally, in some embodiments, the settable drilling fluids of the present invention further may comprise a hydraulic cement. A variety of hydraulic cements may be utilized in accordance with the present invention, including, but not limited to, those comprising calcium, aluminum, silicon, oxygen, iron, and/or sulfur, which set and harden by reaction with water. Suitable hydraulic cements include, but are not limited to, Portland cements, pozzolana cements, gypsum cements, high alumina content cements, slag cements, silica cements, and combinations thereof. In certain embodiments, the hydraulic cement may comprise a Portland cement. In some embodiments, the Portland cements that are suited for use in the present invention are classified as Classes A, C, H, and G cements according to American Petroleum Institute, API Specification for Material and Testing for Well Cements, API Specification 10, Fifth Ed., July 1, 1990.

Where present, the hydraulic cement generally may be included in the settable drilling fluids in an amount sufficient to provide the desired compressive strength, density, and/or cost. In some embodiments, the hydraulic cement may be present in the settable drilling fluids of the present invention in an amount up to about 10% by weight of the settable drilling fluid. In some embodiments, the hydraulic cement may be present in the settable drilling fluids of the present invention in an amount in the range of from 3% to about 7% by weight of the settable drilling fluid.

Optionally, in some embodiments, the settable drilling fluids of the present invention further may comprise vitrified shale. Among other things, the vitrified shale included in the settable compositions may react with excess lime to form a suitable cementing material, for example, calcium silicate hydrate. A variety of vitrified shales are suitable, including those comprising silicon, aluminum, calcium, and/or magnesium. Suitable examples of vitrified shale include, but are not limited to, PRESSUR-SEAL^{®} FINE LCM material and PRESSUR-SEAL^{®} COARSE LCM material, which are commercially available from TXI Energy Services, Inc., Houston, Texas, Generally, the vitrified shale may have any particle size distribution as desired for a particular application. In certain embodiments, the vitrified shale may have a particle size distribution in the range of from about 37 micrometers to about 4,750 micrometers.

Where present, the vitrified shale generally may be included in the settable drilling fluids in an amount sufficient to provide the desired compressive strength, density, and/or cost. In some embodiments, the vitrified shale may be present in the settable drilling fluids of the present invention in an amount up to about 12% by weight of the settable drilling fluid. In some embodiments, the vitrified shale may be present in the settable drilling fluids of the present invention in an amount in the range of from 1% to about 10% by weight of the settable drilling fluid.

Optionally, in some embodiments, the settable drilling fluids of the present invention further may comprise calcium hydroxide (commonly referred to as "hydrated lime"). In some embodiments, the calcium hydroxide may be present in the settable drilling fluids of the present invention in an amount in the range of from about 10% to about 30% by weight of the settable drilling fluid.

Optionally, in some embodiments, the settable drilling fluids of the present invention further may comprise a dispersant. While a variety of dispersants known to those skilled in the art may be used in accordance with the present invention, a suitable dispersant comprises a water-soluble polymer prepared by the condensation of formaldehyde with acetone and sodium bisulfite. Such a dispersant is commercially available as CFR^{™}-3 dispersant from Halliburton Energy Services, Inc., Duncan, Oklahoma. Another suitable dispersant comprises a sodium salt of naphthalene sulfonic acid condensed with formaldehyde, an example of which is commercially available as CFR^{™}-2 dispersant also from Halliburton Energy Services, Inc., Duncan, Oklahoma. Another suitable dispersant comprises gluconic acid, an example of which is commercially available as CFR^{™}-1 dispersant also from Halliburton Energy Services, Inc., Duncan, Oklahoma. In some embodiments, the dispersant may be present in the settable drilling fluids of the present invention in an amount in the range of from about 0.1% to about 5% by weight of the settable drilling fluid.

Optionally, in some embodiments, the settable compositions of the present invention further may comprise a set retarder. As used herein, the term "set retarder" refers to an additive that retards the setting of the settable drilling fluids of the present invention. Examples of suitable set retarding additives include, but are not limited to, ammonium, alkali metals, alkaline earth metals, metal salts of sulfoalkylated lignins, hydroxycarboxy acids, copolymers of 2-acrylamido-2-methylpropane sulfonic acid salt and acrylic acid or maleic acid, and combinations thereof. One example of a suitable sulfoalkylate lignin comprises a sulfomethylated lignin. Suitable set retarding additives are disclosed in more detail in United States Patent No. Re. 31,190.

Suitable set retarding additives are commercially available from Halliburton Energy Services, Inc. under the tradenames HR^{®} 4, HR^{®} 5, HR^{®} 7, HR^{®} 12, HR^{®} 15, HR^{®} 25, SCR™ 100, and SCR™ 500. Generally, where used, the set retarding additive may be included in the settable compositions of the present invention in an amount sufficient to provide the desired set retardation. In some embodiments, the set retarding additive may be present in an amount in the range of from about 0.1% to about 2% by weight of the settable drilling.

Additionally, those of ordinary skill in the art will recognize a variety of additional additives suitable for inclusion in the settable drilling fluids of the present invention for a particular application. Such additives may include, but are not limited to, accelerators, lost circulation materials, fluid loss control additives, and combinations thereof.

### II. Example Methods of the Present Invention

The settable drilling fluids of the present invention may be used in any of a variety of subterranean cementing operations. For example, a settable composition of the present invention that comprises a portion of the drilling fluid used in drilling a well bore may be used in cementing operations in the well bore. While the compositions of the present invention may be used in a variety of cementing operations, they may be particularly suitable for primary cementing operations because the settable drilling fluids of the present invention generally should be compatible with the drilling fluid, if any, remaining in the well bore.

An example of such a cementing operation using the settable drilling fluids of the present invention may comprise providing an aqueous-based drilling fluid, adding CKD to the aqueous-based drilling fluid to form a settable drilling fluid, introducing the settable drilling fluid into a subterranean formation, and allowing the settable drilling fluid to set in the subterranean formation. As will be understood by those of ordinary skill in the art, with the benefit of this disclosure, additional additives, such as those described above, may be added to the settable drilling fluid to impart desired properties thereto. In some embodiments, the settable drilling fluids of the present invention may be used in primary cementing, in that, the cementing embodiments further may comprise introducing a casing into a well bore penetrated by the well bore, wherein the settable drilling fluid sets in an annulus formed between the casing and a wall of the well bore.

In some embodiments, the methods of the present invention further may comprise drilling a well bore while the aqueous-based drilling fluid is circulated in the well bore. At a desired time during the drilling operation (for example, when the well bore, or that portion of the well bore, has been drilled to the desired depth), the aqueous-based drilling fluid may be converted into a settable drilling fluid of the present invention. Converting the aqueous-based drilling fluid into a settable drilling fluid of the present invention generally comprises added CKD to the drilling fluid. In some embodiments, the CKD may be mixed with water to form a settable composition, prior to their addition to the aqueous-based drilling fluid. As will be understood by these of ordinary skill in the art; with the benefit of this disclosure, additional additives, such as those described above, may be added to the aqueous-based drilling fluid to impart desired properties thereto. This settable drilling fluid may then be used in any suitable cementing operation.

To facilitate a better understanding of the present invention, the following examples of certain aspects of some embodiments are given. In no way should the following examples be read to limit, or define, the scope of the invention.

### EXAMPLE 1

Three aqueous-based drilling fluids having a density of 10 pounds per gallon [1200 kg/m³] were prepared. The first drilling fluid was a bentonite mud. The second drilling fluid was a PHPA mud. The third drilling fluid was a lime mud. The formulation of each drilling fluid is provided in Table 1 below. After preparation, each drilling fluid was stirred on a dispersator for at least 60 minutes. Each of these drilling fluids was mixed with CKD and tested as provided in Examples 2-4.

**Table 1:**

| **Drilling Fluid Formulations** | | | |
|---|---|---|---|
| **Formulation** | **Bentonite Mud** | **PHPA Mud** | **Lime Mud** |
| Water, bbl [m³] | 0.928 [0.148] | 0.913 [0.145] | 0.91 [0.145] |
| Bentonite Viscosifier,¹ lb [kg] | 15 [6.8] | 10 [4.54] | 12 [5.44] |
| Sodium Chloride, lb [kg] | -- | 35.9 [16.2] | -- |
| Thinner,² lb [kg] | -- | -- | 4 [1.81] |
| Sodium Hydroxide, lb [kg] | -- | 0.25 [0.113] | 1.5 [0.68] |
| Calcium Hydroxide, lb [kg] | -- | -- | 6 [2.72] |
| Partially Hydrolyzed Polyacrylamide,³ lb [kg] | -- | 1 [0.454] | -- |
| Filtration Control Agent,⁴ lb [kg] | -- | 1 [0.454] | 1 [0.454] |
| Polymer Viscosifier,⁵ lb [kg] | -- | 0.25 [0.113] | 0.5 [0.227] |
| Weighting Material,⁶ lb [kg] | 75 [34] | 52 [23.6] | 73 [33.1] |

| | | | |
|---|---|---|---|
| Ground Bentonite available as AQUAGEL^{®} Viscosifier from Halliburton Energy Services, Inc., Duncan, Oklahoma. ² A ferrochrome lignosulfonate available as QUIK-THIN^{®} Thinner from Halliburton Energy Services, Inc., Duncan, Oklahoma. ³ A granular synthetic polymer containing PHPA copolymer available as EZ MUD DP^{®} Borehole Stabilizer from Halliburton Energy Services, Inc., Duncan, Oklahoma. ⁴ PAC-L^{®} Modifier Natural Cellulosic Polymer available from Halliburton Energy Services, Inc., Duncan, Oklahoma. ⁵ BARAZAN D PLUS^{®} Viscosifier available from Halliburton Energy Services, Inc., Duncan, Oklahoma. ⁶ A ground barium sulfate available as Bariod^{®} Weighting Material from Halliburton Energy Services, Inc., Duncan, Oklahoma. | | | |

### EXAMPLE 2

Sample settable compositions (Fluid Nos. 1-2) were prepared. The sample settable compositions comprised water, CKD, silica fume, a dispersant, a set retarder, and calcium hydroxide as shown below in Table 2.

**Table 2:**

| **Sample Settable Composition Comprising CKD** | | |
|---|---|---|
| **Composition (grams)** | **Fluid No. 1** | **Fluid No. 2** |
| Water | 400 | 400 |
| Class A CKD | 150 | -- |
| Class H CKD | -- | 150 |
| Silica Fume | 150 | 150 |
| Dispersant¹ | 50 | 40 |
| Set Retarder² | 13 | 13 |
| Calcium Hydroxide | 300 | 300 |

| | | |
|---|---|---|
| ¹ CFR™-3L Dispersant from Hatliburton Energy Services, Inc. ² HR™-4L Retarder from Halliburton Energy Services, Inc. | | |

After preparation of the sample settable compositions, to prepare sample settable drilling fluids, the sample settable compositions were mixed with the sample drilling fluids from Example 1 in a volume ratio of sample settable composition to drilling fluid of about 80:20, as shown below in Table 3. Thereafter, the resultant foamed sample compositions were subjected to 72-hour compressive strength tests at the temperature indicated in accordance with API Specification 10. The results of the compressive strength tests are set forth in the table below.

**Table 3:**

| **Compressive Strength of Sample Settable Drilling Fluids** | | | |
|---|---|---|---|
| **Settable Composition (80 parts by vol)** | **Drilling Fluid (20 parts by vol)** | **Temp. (° F) [° C]** | **72 Hr Compressive Strength (psi) [kPa]** |
| Fluid No. 1 | PHPA Mud | 80 [27] | Not Set |
| | | 140 [60] | 284 [1960] |
| | | 160 [71] | 385 [2650] |
| Fluid No. 2 | PHPA Mud | 80 [27] | Not Set |
| | | 140 [60] | 328 [2260] |
| | | 160 [71] | 363 [2500] |
| Fluid No. 2 | Bentonite Mud | 80 [27] | 13.49 [93.01] |
| | | 140 [60] | 597 [4120] |
| | | 160 [71] | 191.7 [1322] |
| Fluid No. 2 | Lime Mud | 80 [27] | Not Set |
| | | 140 [60] | 488 [3360] |
| | | 160 [71] | 319 [2200] |

### EXAMPLE 3

A sample settable composition (Fluid No. 3) was prepared. Fluid No. 3 comprised water, CKD, silica fume, class H Portland cement, a dispersant, a set retarder, and calcium hydroxide as shown below in Table 4.

**Table 4:**

| **Sample Settable Composition Comprising CKD and Portland Cement** | |
|---|---|
| **Composition (grams)** | **Fluid No. 3** |
| Water | 400 |
| Class H CKD | 75 |
| Silica Fume | 150 |
| Class H Portland Cement | 75 |
| Dispersant¹ | 40 |
| Set Retarder² | 13 |
| Calcium Hydroxide | 300 |

| | |
|---|---|
| ¹ CFR™-3L Dispersant from Halliburton Energy Services, Inc. ² HR™-4L Retarder from Halliburton Energy Services, Inc. | |

After preparation, to prepare sample settable drilling fluids, Fluid No. 3 was mixed with the sample drilling fluids from Example 1 in a volume ratio of Fluid No. 3 to drilling fluid of about 80:20. Thereafter, the resultant settable drilling fluids were subjected to thickening time and 72-hour compressive strength tests at the temperature indicated in accordance with API Specification 10. The results of the compressive strength tests are set forth in the table below.

**Table 5:**

| **Compressive Strength/Thickening Time of Sample Settable Drilling Fluids** | | | | |
|---|---|---|---|---|
| **Settable Composition (80 parts by vol)** | **Drilling Fluid (20 parts by vol)** | **Temp. (° F) [° C]** | **72 Hr Compressive Strength (psi) [kPa]** | **Thickening Time to 70 BC (hr:min)** |
| Fluid No. 3 | Lime Mud | 80 [27] | 25 [172] | n/a |
| | | 140 [60] | 585 [4030] | 6:22 |
| | | 160 [71] | 541 [3730] | n/a |
| Fluid No. 3 | PHPA Mud | 80 [27] | 15.57 [107.4] | n/a |
| | | 140 [60] | 323 [2230] | n/a |
| | | 160 [71] | 279 [1920] | n/a |
| Fluid No. 3 | Bentonite Mud | 80 [27] | 18.51 [127.6] | n/a |
| | | 140 [60] | 866 [5970] | 3:19 |
| | | 160 [71] | 699 [4820] | n/a |

### EXAMPLE 4

A sample settable composition (Fluid No. 4) was prepared. Fluid No. 4 comprised water, CKD, silica fume, vitrified shale, class H Portland cement, a dispersant, a set retarder, and calcium hydroxide as shown below in Table 6.

**Table 6:**

| **Sample Settable Composition Comprising CKD, Portland Cement, and Vitrified Shale** | |
|---|---|
| **Composition (grams)** | **Fluid No. 4** |
| Water | 400 |
| Class H CKD | 37.5 |
| Silica Fume | 150 |
| Vitrified Shale | 37.5 |
| Class H Portland Cement | 75 |
| Dispersant¹ | 40 |
| Set Retarder² | 13 |
| Calcium Hydroxide | 300 |

| | |
|---|---|
| ¹ CFR™-3L Dispersant from Halliburton Energy Services, Inc. ² HR™-4L Retarder from Halliburton Energy Services, Inc. | |

After preparation, to prepare sample settable drilling fluids, Fluid No. 4 was mixed with the sample drilling fluids from Example 1 in a volume ratio of Fluid No. 4 to drilling fluid of about 80:20. Thereafter, the resultant settable drilling fluids were subjected to 72-hour compressive strength tests at the temperature indicated in accordance with API Specification 10. The results of the compressive strength tests are set forth in the table below.

**Table 7:**

| **Compressive Strengths of Sample Settable Drilling Fluid** | | | |
|---|---|---|---|
| **Settable Composition (80 parts by vol)** | **Drilling Fluid (20 parts by vol)** | **Temp. (° F) [° C]** | **72 Hr Compressive Strength (psi) [kPa]** |
| Fluid No. 4 | Lime Mud | 80 [27] | 12.47 [85.98] |
| | | 140 [60] | 864 [5960] |
| | | 160 [71] | 676 [4660] |
| Fluid No. 4 | PHPA Mud | 80 [27] | 34.4 [237] |
| | | 140 [60] | 744 [5130] |
| | | 160 [71] | 713 [4920] |
| Fluid No. 4 | Bentonite Mud | 80 [27] | 18[12] |
| | | 140 [60] | 676 [4660] |
| | | 160 [71] | 717 [4940] |

These examples thus indicate that settable drilling fluids comprising a drilling fluid and CKD may have suitable thickening times and/or compressive strengths for a particular application.

Therefore, the present invention is well adapted to attain the ends and advantages mentioned as well as those that are inherent therein. It will be appreciated that the invention may be modified within the scope of the appended claims.

## Claims

1. A settable drilling fluid comprising:
an aqueous-based drilling fluid capable of carrying drill cuttings, wherein the aqueous-based drilling fluid comprises:
water present in an amount sufficient for using the aqueous-based drilling fluid for drilling in a subterranean formation; and
at least one additive selected from the group consisting of a viscosifier, a weighting material, a thinner, and a filtration control agent; and
cement kiln dust present in the settable drilling fluid in an amount in the range of from 1% to 25% by weight of the settable drilling fluid.

2. A settable drilling fluid according to claim 1 wherein the aqueous-based drilling fluid comprises water and the settable drilling fluid comprises additional water.

3. A settable drilling fluid according to claim 1 wherein the aqueous-based drilling fluid is a bentonite mud, a lime mud, a partially hydrolyzed polyacrylamide mud, or combinations thereof.

4. A settable drilling fluid according to claim 1 wherein the aqueous-based drilling fluid is an aqueous gel comprising a viscosifier selected from the group consisting of a clay, a polymeric viscosifier, and combinations thereof.

5. A settable drilling fluid according to claim 1 wherein the aqueous-based drilling fluid is present in the settable drilling fluid in an amount in the range of from 5% to 40% by weight of the settable drilling fluid.

6. A settable drilling fluid according to claim 1 wherein the settable drilling fluid comprises at least one additive selected from the group consisting of an accelerator, a lost circulation material, a fluid loss control additive, a dispersant, a set retarder, calcium hydroxide, silica fume, a hydraulic cement, vitrified shale, and combinations thereof.

7. A settable drilling fluid according to claim 1 wherein the settable drilling fluid comprises silica fume in an amount in the range of from 5% to 20% by weight of the settable drilling fluid.

8. A settable drilling fluid according to claim 1 wherein the settable drilling fluid comprises a hydraulic cement in an amount up to about 10% by weight of the settable drilling fluid.

9. A settable drilling fluid according to claim 1 wherein the settable drilling fluid comprises vitrified shale in an amount up to about 10% by weight of the settable drilling fluid.

10. A settable drilling fluid according to claim 1 wherein the settable drilling fluid comprises calcium hydroxide in an amount in the range of from 10% to 30% by weight of the settable drilling fluid.

11. A settable drilling fluid according to any preceding claim, further comprising:
silica fume; and
calcium hydroxide.

12. A settable drilling fluid according to claim 11 wherein:
the silica fume is present in an amount in the range of from 5% to 20% by weight of the settable drilling fluid; and
the calcium hydroxide is present in an amount in the range of from 10% to 30% by weight of the settable drilling fluid.

13. A settable drilling fluid according to claim 11, further comprising:
a hydraulic cement; and
vitrified shale.

14. A settable drilling fluid according to claim 13, wherein:
the silica fume is present in an amount in the range of from 5% to 20% by weight of the settable drilling fluid;
the hydraulic cement is present in an amount up to 10% by weight of the settable drilling fluid;
the vitrified shale is present in an amount up to 10% by weight of the settable drilling fluid; and
the calcium hydroxide is present in an amount in the range of from 10% to 30% by weight of the settable drilling fluid.

15. A method of cementing comprising:
providing a settable drilling fluid according to claim 1;
introducing the settable drilling fluid into a subterranean formation; and
allowing the settable drilling fluid to set in the subterranean formation.

16. A method according to claim 15, wherein the settable drilling fluid is allowed to set in an annulus between the subterranean formation and a pipe string located in the subterranean formation.

17. A method of converting an aqueous-based drilling fluid to a settable drilling fluid comprising:
providing an aqueous-based drilling fluid, wherein the aqueous-based drilling fluid comprises:
water present in an amount sufficient for using the aqueous-based drilling fluid for drilling in a subterranean formation; and
at least one additive selected from the group consisting of a viscosifier, a weighting material, a thinner, and a filtration control agent; and
adding cement kiln dust to the aqueous-based drilling fluid to form the settable drilling fluid, wherein the cement kiln dust is added in an amount in the range of from 1% to 25% by weight of the settable drilling fluid.

18. A method of drilling a well bore and cementing a well bore comprising:
drilling a well bore;
circulating an aqueous-based drilling fluid in the well bore during the step of drilling the well bore, wherein the aqueous-based drilling fluid comprises:
water present in an amount sufficient for using the aqueous-based drilling fluid for drilling in a subterranean formation; and
at least one additive selected from the group consisting of a viscosifier, a weighting material, a thinner, and a filtration control agent;
adding cement kiln dust to the aqueous-based drilling fluid to form a settable drilling fluid; and
allowing the settable drilling fluid to set in the well bore;
wherein the cement kiln dust is added in an amount in the range of from 1% to 25% by weight of the settable drilling fluid.

19. A method according to claim 17 or 18, further comprising the step of adding additional water to the aqueous-based drilling fluid.

## Patentansprüche

1. Abbindbare Bohrflüssigkeit, umfassend:
eine Bohrflüssigkeit auf wässriger Basis, die Bohrklein transportieren kann, wobei die Bohrflüssigkeit auf wässriger Basis Folgendes aufweist:
Wasser, das in einer Menge anwesend ist, die ausreicht, um die Bohrflüssigkeit auf wässriger Basis zum Bohren in einer unterirdischen Formation zu verwenden, und
wenigstens einen Zusatzstoff, der aus der Gruppe bestehend aus einem Viskositäts-Erhöhungsmittel, einem Beschwerungsmaterial, einem Verdünner und einem Filtrationsregler ausgewählt ist, und
Zementofenstaub, der in einer Menge im Bereich von 1 Gew.-% bis 25 Gew.-% der abbindbaren Bohrflüssigkeit in der abbindbaren Bohrflüssigkeit anwesend ist.

2. Abbindbare Bohrflüssigkeit nach Anspruch 1, wobei die Bohrflüssigkeit auf wässriger Basis Wasser aufweist und die abbindbare Bohrflüssigkeit zusätzliches Wasser aufweist.

3. Abbindbare Bohrflüssigkeit nach Anspruch 1, wobei die Bohrflüssigkeit auf wässriger Basis ein Bentonitschlamm, ein Kalkschlamm, ein Schlamm aus teilweise hydrolysiertem Polyacrylamid oder eine Kombination davon ist.

4. Abbindbare Bohrflüssigkeit nach Anspruch 1, wobei die Bohrflüssigkeit auf wässriger Basis ein wässriges Gel ist, das ein aus der Gruppe bestehend aus einem Ton, einem polymeren Viskositäts-Erhöhungsmittel und Kombinationen davon ausgewähltes Viskositäts-Erhöhungsmittel aufweist.

5. Abbindbare Bohrflüssigkeit nach Anspruch 1, wobei die Bohrflüssigkeit auf wässriger Basis in einer Menge im Bereich von 5 Gew.-% bis 40 Gew.-% der abbindbaren Bohrflüssigkeit in der abbindbaren Bohrflüssigkeit anwesend ist.

6. Abbindbare Bohrflüssigkeit nach Anspruch 1, wobei die abbindbare Bohrflüssigkeit wenigstens einen Zusatzstoff aufweist, der aus der Gruppe bestehend aus einem Beschleuniger, einem Spülungsverlustmaterial, einem Wasserbindemittel, einem Dispergierungsmittel, einem Abbindungsverzögerer, Calciumhydroxid, Silikastaub, einem hydraulischen Zement, verglastem Schiefer und Kombinationen davon ausgewählt ist.

7. Abbindbare Bohrflüssigkeit nach Anspruch 1, wobei die abbindbare Bohrflüssigkeit Silikastaub in einer Menge im Bereich von 5 Gew.-% bis 20 Gew.-% der abbindbaren Bohrflüssigkeit aufweist.

8. Abbindbare Bohrflüssigkeit nach Anspruch 1, wobei die abbindbare Bohrflüssigkeit einen hydraulischen Zement in einer Menge von bis zu etwa 10 Gew.-% der abbindbaren Bohrflüssigkeit aufweist.

9. Abbindbare Bohrflüssigkeit nach Anspruch 1, wobei die abbindbare Bohrflüssigkeit verglasten Schiefer in einer Menge von bis zu etwa 10 Gew.-% der abbindbaren Bohrflüssigkeit aufweist.

10. Abbindbare Bohrflüssigkeit nach Anspruch 1, wobei die abbindbare Bohrflüssigkeit Calciumhydroxid in einer Menge im Bereich von 10 Gew.-% bis 30 Gew.-% der abbindbaren Bohrflüssigkeit aufweist.

11. Abbindbare Bohrflüssigkeit nach einem der vorhergehenden Ansprüche, das ferner Folgendes aufweist:
Silikastaub und
Calciumhydroxid.

12. Abbindbare Bohrflüssigkeit nach Anspruch 11, wobei:
der Silikastaub in einer Menge im Bereich von 5 Gew.-% bis 20 Gew.-% der abbindbaren Bohrflüssigkeit anwesend ist und
das Calciumhydroxid in einer Menge im Bereich von 10 Gew.-% bis 30 Gew.-% der abbindbaren Bohrflüssigkeit anwesend ist.

13. Abbindbare Bohrflüssigkeit nach Anspruch 11, das ferner Folgendes aufweist:
einen hydraulischen Zement und
verglasten Schiefer.

14. Abbindbare Bohrflüssigkeit nach Anspruch 13, wobei:
der Silikstaub in einer Menge im Bereich von 5 Gew.-% bis 20 Gew.-% der abbindbaren Bohrflüssigkeit anwesend ist,
der hydraulische Zement in einer Menge von bis zu 10 Gew.-% der abbindbaren Bohrflüssigkeit anwesend ist, der verglaste Schiefer in einer Menge von bis zu 10 Gew.-% der abbindbaren Bohrflüssigkeit anwesend ist und
das Calciumhydroxid in einer Menge im Bereich von 10 Gew.-% bis 30 Gew.-% der abbindbaren Bohrflüssigkeit anwesend ist.

15. Zementierungsverfahren, umfassend:
Bereitstellen einer abbindbaren Bohrflüssigkeit nach Anspruch 1,
Einführen der abbindbaren Bohrflüssigkeit in eine unterirdische Formation und
Abbindenlassen der abbindbaren Bohrflüssigkeit in der unterirdischen Formation.

16. Verfahren nach Anspruch 15, wobei die abbindbare Bohrflüssigkeit in einem Ringraum zwischen der unterirdischen Formation und einem in der unterirdischen Formation befindlichen Rohrstrang abbinden darf.

17. Verfahren zum Umsetzen einer Bohrflüssigkeit auf wässriger Basis in eine abbindbare Bohrflüssigkeit, umfassend:
Bereitstellen einer Bohrflüssigkeit auf wässriger Basis, wobei die Bohrflüssigkeit auf wässriger Basis Folgendes aufweist:
Wasser, das in einer Menge anwesend ist, die ausreicht, um die Bohrflüssigkeit auf wässriger Basis zum Bohren in einer unterirdischen Formation zu verwenden, und
wenigstens einen Zusatzstoff, der aus der Gruppe bestehend aus einem Viskositäts-Erhöhungsmittel, einem Beschwerungsmaterial, einem Verdünner und einem Filtrationsregler ausgewählt ist, und
Hinzufügen von Zementofenstaub zu der Bohrflüssigkeit auf wässriger Basis, um die abbindbare Bohrflüssigkeit zu bilden, wobei der Zementofenstaub in einer Menge im Bereich von 1 Gew.-% bis 25 Gew.-% der abbindbaren Bohrflüssigkeit hinzugefügt wird.

18. Verfahren zum Bohren eines Bohrlochs und Zementieren eines Bohrlochs, umfassend:
Bohren eines Bohrlochs,
Umwälzen einer Bohrflüssigkeit auf wässriger Basis in dem Bohrloch während des Schrittes des Bohrens des Bohrlochs, wobei die Bohrflüssigkeit auf wässriger Basis Folgendes aufweist:
Wasser, das in einer Menge anwesend ist, die ausreicht, um die Bohrflüssigkeit auf wässriger Basis zum Bohren in einer unterirdischen Formation zu verwenden, und
wenigstens einen Zusatzstoff, der aus der Gruppe bestehend aus einem Viskositäts-Erhöhungsmittel, einem Beschwerungsmaterial, einem Verdünner und einem Filtrationsregler ausgewählt ist,
Hinzufügen von Zementofenstaub zu der Bohrflüssigkeit auf wässriger Basis, um eine abbindbare Bohrflüssigkeit zu bilden, und
Abbindenlassen der abbindbaren Bohrflüssigkeit in dem Bohrloch,
wobei der Zementofenstaub in einer Menge im Bereich von 1 Gew.-% bis 25 Gew.-% der abbindbaren Bohrflüssigkeit hinzugefügt wird.

19. Verfahren nach Anspruch 17 oder 18, das ferner den Schritt des Hinzufügens von zusätzlichem Wasser zu der Bohrflüssigkeit auf wässriger Basis aufweist.

## Revendications

1. Boue de forage durcissable comprenant :
une boue de forage à base d'eau capable de porter des déblais de forage, cette boue de forage à base d'eau comprenant :
de l'eau présente dans une quantité suffisante pour utiliser la boue de forage à base d'eau pour forer dans une formation souterraine ; et
au moins un additif choisi parmi le groupe consistant en un additif améliorant l'indice de viscosité, un alourdissant, un fluidifiant et un agent de contrôle de filtration ; et
de la poussière de four à ciment présente dans la boue de forage durcissable dans une quantité située dans la plage allant de 1 % à 25 % en poids de la boue de forage durcissable.

2. Boue de forage durcissable selon la revendication 1, la boue de forage à base d'eau comprenant de l'eau et la boue de forage durcissable comprenant de l'eau supplémentaire.

3. Boue de forage durcissable selon la revendication 1, dans laquelle la boue de forage à base d'eau est une boue bentonitique, une boue carbonatée, une boue au polyacrylamide partiellement hydrolysé, ou des combinaisons de celles-ci.

4. Boue de forage durcissable selon la revendication 1, dans laquelle la boue de forage à base d'eau est un gel aqueux comprenant un additif améliorant l'indice de viscosité choisi parmi le groupe consistant en un argile, un additif polymère améliorant l'indice de viscosité, et des combinaisons de ceux-ci.

5. Boue de forage durcissable selon la revendication 1, dans laquelle la boue de forage à base d'eau est présente dans la boue de forage durcissable dans une quantité située dans la plage allant de 5 % à 40 % en poids de la boue de forage durcissable.

6. Boue de forage durcissable selon la revendication 1, cette boue de forage durcissable comprenant au moins un additif choisi parmi le groupe consistant en un accélérateur, un colmatant, un additif de perte de circulation, un agent dispersant, un retardateur de durcissement, de l'hydroxyde de calcium, des fumées de silice, un ciment hydraulique, du schiste vitrifié et une combinaison de ceux-ci.

7. Boue de forage durcissable selon la revendication 1, cette boue de forage durcissable comprenant des fumées de silice dans une quantité située dans la plage allant de 5 % à 20 % en poids de la boue de forage durcissable.

8. Boue de forage durcissable selon la revendication 1, cette boue de forage durcissable comprenant un ciment hydraulique dans une quantité allant jusqu'à environ 10 % en poids de la boue de forage durcissable.

9. Boue de forage durcissable selon la revendication 1, cette boue de forage durcissable comprenant du schiste vitrifié dans une quantité allant jusqu'à environ 10 % en poids de la boue de forage durcissable.

10. Boue de forage durcissable selon la revendication 1, cette boue de forage durcissable comprenant de l'hydroxyde de calcium dans une quantité située dans la plage allant de 10 % à 30 % en poids de la boue de forage durcissable.

11. Boue de forage durcissable selon l'une quelconque des revendications précédentes, comprenant en outre :
des fumées de silice ; et
de l'hydroxyde de calcium.

12. Boue de forage durcissable selon la revendication 11, dans laquelle :
les fumées de silice sont présentes dans une quantité située dans la plage allant de 5 % à 20 % en poids de la boue de forage durcissable ; et
l'hydroxyde de calcium est présent dans une quantité située dans la plage allant de 10 % à 30 % en poids de la boue de forage durcissable.

13. Boue de forage durcissable selon la revendication 11, comprenant en outre :
un ciment hydraulique ; et
du schiste vitrifié.

14. Boue de forage durcissable selon la revendication 13, dans laquelle :
les fumées de silice sont présentes dans une quantité située dans la plage allant de 5 % à 20 % en poids de la boue de forage durcissable ;
le ciment hydraulique est présent dans une quantité allant jusqu'à 10 % en poids de la boue de forage durcissable ;
le schiste vitrifié est présent dans une quantité allant jusqu'à 10 % en poids de la boue de forage durcissable ; et
l'hydroxide de calcium est présent dans une quantité située dans la plage allant de 10 % à 30 % en poids de la boue de forage durcissable.

15. Procédé de cimentage comprenant :
la fourniture d'une boue de forage durcissable selon la revendication 1 ;
l'introduction de cette boue de forage durcissable dans une formation souterraine ; et
l'attente du durcissement de la boue de forage durcissable dans la formation souterraine.

16. Procédé selon la revendication 15, dans lequel on laisse durcir la boue de forage durcissable dans un espace annulaire dans la formation souterraine et dans un train de tiges situé dans la formation souterraine.

17. Procédé de conversion d'une boue de forage à base d'eau en une boue de forage durcissable, comprenant :
la fourniture d'une boue de forage à base d'eau, cette boue de forage à base d'eau comprenant :
de l'eau présente dans une quantité suffisante pour utiliser le boue de forage à base d'eau pour forer dans une formation souterraine ; et
au moins un additif choisi parmi le groupe consistant en additif améliorant l'indice de viscosité, un alourdissant, un fluidifiant, et un agent de contrôle de filtration ; et
l'addition de poussière de four à ciment à la boue de forage à base d'eau pour former la boue de forage durcissable, la poussière de four à ciment étant ajoutée dans une quantité située dans la plage allant de 1 % à 25 % en poids de la boue de forage durcissable.

18. Procédé de forage d'un puits de forage et cimentation d'un puits de forage, comprenant
le forage d'un puits de forage ;
la circulation d'une boue de forage à base d'eau dans le puits de forage pendant l'étape de forage du puits de forage, cette boue de forage à base d'eau comprenant :
de l'eau présente dans une quantité suffisante pour utiliser la boue de forage à base d'eau pour forer dans une formation souterraine ; et
au moins un additif choisi parmi le groupe consistant en un additif améliorant l'indice de viscosité, un alourdissant, un fluidifiant et un agent de contrôle de filtration ;
l'addition de poussière de four à ciment à la boue de forage à base d'eau pour former une boue de forage durcissable ; et
l'attente du durcissement de la boue de forage durcissable dans le puits de forage ;
dans lequel la poussière de four à ciment est ajoutée dans une quantité située dans la plage allant de 1 % à 25 % en poids de la boue de forage durcissable.

19. Procédé selon la revendication 17 ou 18, comprenant en outre l'étape d'addition d'eau supplémentaire à la boue de forage à base d'eau.
